# EUROPÄISCHE PATENTSCHRIFT

(11) **EP 3 134 584 B1**
(45) Veröffentlichungstag und Bekanntmachung des Hinweises auf die Patenterteilung: **31.01.2018**
(21) Anmeldenummer: 15705193.9
(22) Anmeldetag: 03.02.2015
(51) Int. Cl.: E03C 1/02, E03C 1/04, F16L 35/00

(54) **SICHERUNGSADAPTER**
SECUREMENT ADAPTOR
ADAPTATEUR DE SECURISATION

(30) Priorität: 25.04.2014 US 201414261951
(43) Veröffentlichungstag der Anmeldung: 01.03.2017
(73) Patentinhaber: Neoperl GmbH, 79379 Müllheim (DE)
(72) Erfinder: DAVINO, David, 06712 Prospect (US)
(74) Vertreter: Börjes-Pestalozza, Henrich
(86) Internationale Anmeldenummer: PCT/EP2015/000204
(87) Internationale Veröffentlichungsnummer: WO 2015/161906

(56) Entgegenhaltungen:
- US-A- 4 146 058
- US-A- 5 195 785

## Beschreibung

Die Erfindung betrifft einen Sicherungsadapter, der zum Anschluss zumindest eines Fluidleitungsabschnitts vorgesehen ist. Dieser Sicherungsadapter ist beispielsweise zwischen einer Rohrleitung oder dergleichen sanitärer Leitung oder einem Wasserzulaufventil einerseits und einem sanitären Auslauf, wie etwa einem Duschbrausekopf oder Brauseschlauch, montierbar und soll einem unsachgemäßen Lösen der mit dem Sicherungsadapter bewerkstelligten Verbindung entgegenwirken.

Es sind bereits Sicherungsadapter mit einer Innenhülse und einer Aussenhülse bekannt, wobei die Innenhülse an einem ersten Hülsen-Endbereich ein zum Anschluss an einem ersten Fluidleitungsabschnitt vorgesehenes Befestigungsgewinde und an einem zweiten Hülsen-Endbereich ein als Bewegungsgewinde ausgebildetes Aussengewinde aufweist, welches Aussengewinde mit einem Innengewinde der Aussenhülse verschraubbar ist, und wobei die Innenhülse ein einer Schraub-Endstellung mit ihrem Aussengewinde derart in das Innengewinde des Aussenhülse eingeschraubt ist, dass eine Anschlagsfläche an der Innenhülse an einer Gegenanschlagsfläche an der Aussenhülse anliegt.

Es ist bekannt, dass einerseits im Sanitärbereich, beispielsweise beim Duschvorgang, viel Wasser verbraucht wird, während andererseits immer weniger Wasser dazu zur Verfügung steht. Um dieser Diskrepanz entgegenzuwirken und um Wasser zu sparen, wurden sogenannte Durchflussmengenregler entwickelt, die gewährleisten, dass die beispielsweise beim Duschvorgang austretende Wassermenge eine bestimmte maximale Durchflussleistung nicht übersteigt und Druckschwankungen in der zuführenden Wasserleitung kompensiert werden. Die aus dem Stand der Technik bekannten Durchflussmengenregler werden daher üblicherweise in die Verbindung eines Duschbrausekopfes mit einer Wasserzuleitung, beispielsweise einem Schlauch, oder stattdessen in die Verbindung zwischen der Mischbatterie einer Dusche einerseits und einer Wasserleitung, beispielsweise einem Schlauch, andererseits zwischengeschaltet. Auf diese Weise ist es auch für den ungeübten Verbraucher problemlos möglich, den Durchflussmengenregler in der Regel werkzeuglos austauschen oder gänzlich zu entfernen, beispielsweise um die zuführende Wassermenge zu erhöhen oder zu verringern.

Länderspezifische Regelungen sehen, beispielsweise in den USA, vor, dass sanitäre Einrichtungen, wie etwa Duschbrausen, mit einem solchen Durchflussmengenregler betrieben werden müssen. So fordert der sogenannte Energy Policy Act of 1992 der US-Regierung neben der Verwendung von Durchflussmengenreglern auch, dass diese nicht manipuliert werden dürfen, um etwa die austretende Wassermenge zu verändern. Auch ein gänzliches Entfernen der Durchflussmengenregler ist nicht mehr zulässig.

Aus dem Stand der Technik ist bereits eine Vorrichtung bekannt, die sich dieser Problematik annimmt. In der US 8,901,587 B1 ist die Montage des gesetzlich vorgeschriebenen Durchflussmengenreglers mittels eines Adapters beschrieben, welcher Adapter sich hinter der Wand befindet und mit einem Wasserzulaufventil verbunden ist. Dieser Adapter weist zur Montage und Demontage einen Innensechskant auf, der abströmseitig nach dem Durchflussmengenregler angeordnet ist. In Strömungsrichtung hinter dem Adapter ist eine Duschbrause mittels eines vorgeschalteten Rohres mit Gewinde befestigt.

In der US 4 146 058 A ist eine Gewindekupplungsschutzvorrichtung mit einem länglichen Körper beschrieben, die eine Innen- und eine Außenhülse aufweist. Durch die Innen- und die Außenhülse der Gewindekupplungsschutzvorrichtung ist ein Verbindungsgewinde ausgebildet. Die Außenhülse der Gewindekupplungsschutzvorrichtung weist eine Werkzeugangriffsfläche auf, mittels welcher die Außen- und die Innenhülse verschraubbar sind.

Diese aus dem Stand der Technik bekannte Vorrichtung weist den Nachteil auf, dass der Durchflussmengenregler, der sich hinter der Wand befindet, auch durch den ungeübten Verbraucher einfach entfernt werden kann. Dazu genügt ein Sechskantwerkzeug, um den Adapter nach Entfernen des Duschbrausekopfes oder Brauseschlauches zu entfernen und um damit an den Durchflussmengenregler zu gelangen. Solche Sechskantwerkzeuge stehen auch dem ungeübten Verbraucher ohne weiteres zur Verfügung, da ihre Verwendung in verschiedenen technischen Bereichen üblich ist.

Es besteht daher die Aufgabe, einen Sicherungsadapter der eingangs erwähnten Art zu schaffen, mit der sich die Verbindung an zumindest einem Fluidleitungsabschnitt derart sichern lässt, dass ein unberechtigtes Lösen dieser Verbindung unterbunden wird.

Die erfindungsgemäße Lösung dieser Aufgabe besteht bei dem Sicherungsadapter der eingangs erwähnten Art insbesondere darin, dass am Hülseninnenumfang der Außenhülse ein Anschlag vorgesehen ist, an dem in einer Dreh-Endstellung des Sicherungsadapters ein am Außenumfang der Innenhülse angeordneter Gegenanschlag derart anliegt, dass Innenhülse und Außenhülse ohne Eingriff von dem das Bewegungsgewinde bildenden Innen- und Außengewinde relativ zueinander frei drehbar sind.

Der erfindungsgemäße Sicherungsadapter weist eine Innenhülse auf, die an einem ersten Hülsen-Endbereich ein Befestigungsgewinde hat, das zum Anschluss des Sicherungsadapters an einem ersten Fluidleitungsabschnitt vorgesehen ist. Der Sicherungsadapter weist an dem gegenüberliegenden zweiten Hülsen-Endbereich ein Außengewinde auf, das demgegenüber als Bewegungsgewinde ausgebildet ist. Das an der Innenhülse vorgesehene Außengewinde ist mit einem Innengewinde verschraubbar, welches Innengewinde an einer Außenhülse vorgesehen ist. Das Befestigungsgewinde hat im Vergleich zum Bewegungsgewinde eine wesentlich höhere Reibung und kann auch selbstsichernd ausgebildet sein. Am Hülseninnenumfang der Außenhülse ist ein Anschlag vorgesehen, an dem in einer Dreh-Endstellung des Sicherungsadapters ein am Außenumfang der Innenhülse angeordneter Gegenanschlag derart anliegt, dass die Innenhülse und die Außenhülse ohne Eingriff von dem das Bewegungsgewinde bildenden Innen- und Außengewinde relativ frei drehbar sind. Demgegenüber ist die Innenhülse mit ihrem Außengewinde in einer Schraub-Endstellung derart in das Innengewinde der Außenhülse eingeschraubt, dass eine Anschlagsfläche an der Innenhülse an einer Gegenanschlagsfläche an der Außenhülse anliegt. Ist die Innenhülse vollständig in die Außenhülse eingeschraubt und liegt die an der Innenhülse vorgesehene Anschlagfläche an der zugeordneten Gegenanschlagsfläche der Außenhülse an, wird ein auf die Außenhülse ausgeübtes Drehmoment in dieser Schraub-Endstellung auf die Innenhülse übertragen, so dass die Innenhülse auch kraftvoll mit ihrem Befestigungsgewinde auf ein Gegengewinde des ersten Fluidleitungsabschnitts aufgeschraubt werden kann. Will insbesondere ein unberechtigter Anwender diese Verbindung wieder lösen, indem er mit einem entsprechenden Drehmoment am Außenumfang der Außenhülse ansetzt, wird zunächst das wesentlich leichtgängigere Bewegungsgewinde zwischen der Innenhülse und der Außenhülse gelöst, während die Innenhülse mit dem Befestigungsgewinde sicher am ersten Fluidleitungsabschnitt gehalten bleibt. Da ein Lösen des Befestigungsgewindes insbesondere in der Dreh-Endstellung, in welcher die Außenhülse und die Innenhülse relativ zueinander frei verdrehbar sind, nicht möglich ist, bleibt der Sicherungsadapter mit dem Befestigungsgewinde seiner Innenhülse auch weiterhin sicher und fest an dem ersten Fluidleitungsabschnitt gehalten und das Hülseninnere von Außen- und Innenhülse bleibt für diesen Anwender bis auf weiteres unerreichbar.

Damit das an der Innenhülse vorgesehene Befestigungsgewinde mit dem ersten Fluidleitungsabschnitt selbst dann fest verbunden bleibt, wenn ein auf die Außenhülse ausgeübtes Drehmoment das zwischen Außenhülse und Innenhülse vorgesehene Bewegungsgewinde löst, ist es vorteilhaft, wenn das zum Anschluss an dem ersten Fluidleitungsabschnitt vorgesehene Befestigungsgewinde als Steil- oder als Spitzgewinde ausgestaltet ist. Eine besonders einfache und bevorzugte Ausführungsform gemäß der Erfindung sieht vor, dass das an der Innenhülse angeordnete Befestigungsgewinde ein Innengewinde ist. Während das Außengewinde am Hülsenaußenumfang der Innenhülse vorgesehen sein kann, ist das Befestigungsgewinde innenumfangsseitig an der Innenhülse als Innengewinde ausgebildet.

Eine Ausführungsform gemäß der Erfindung, bei der sich das Bewegungsgewinde im Vergleich zum Befestigungsgewinde durch eine wesentlich geringere Reibungskraft in Drehrichtung auszeichnet, sieht vor, dass das an der Innenhülse vorgesehene Außengewinde des Bewegungsgewindes ein Trapezgewinde ist. Wegen seines vergleichsweise geringen Flankenwinkels und dementsprechend geringer Keilwirkung des Trapezgewindes an dessen Flanken wird eine wesentlich geringere Reibung verursacht. Um den erfindungsgemäßen Sicherungsadapter zum Verbinden von zwei benachbarten Fluidleitungsabschnitten einer Fluidleitung und insbesondere einer Wasserleitung zu verwenden, ist es zweckmäßig, wenn die Außenhülse zum Anschluss an einem zweiten Fluidleitungsabschnitt ein Außengewinde trägt.

Eine bevorzugte Weiterbildung gemäß der Erfindung besteht darin, dass zumindest eine Ringdichtung vorgesehen ist, die einen zwischen der Innenhülse und der Außenhülse verbleibenden Ringspalt abdichtet. Die Fluidleitung, welche die mittels dem erfindungsgemäßen Sicherungsadapter verbundenen ersten und zweiten Fluidleitungsabschnitte umfasst, ist auch im Bereich des Sicherungsadapters in der Schraub-Endstellung auslaufsicher und dicht, wenn zumindest eine Ringdichtung vorgesehen ist, die einen zwischen der Innenhülse und der Außenhülse verbleibenden Ringspalt abdichtet.

Dabei sieht eine bevorzugte Ausführungsform gemäß der Erfindung vor, dass am Hülsenaußenumfang der Innenhülse mindestens eine Ringnut zur Aufnahme eines als Ringdichtung dienenden Dichtrings vorgesehen ist.

Um ein gegebenenfalls auch unberechtigtes Lockern der mit Hilfe des erfindungsgemäßen Sicherungsadapters bewerkstelligten Verbindung anzuzeigen, ist vorgesehen, dass die zumindest eine Ringdichtung in der Schraub-Endstellung den Ringspalt abdichtet und demgegenüber in der Dreh-Endstellung derart im Bereich einer Querschnittserweiterung des lichten Hülsen-Querschnittes der Außenhülse angeordnet ist, dass die Ringdichtung funktionslos und der zwischen Außen- und Innenhülse verbleibende Ringspalt daher fluiddurchlässig ist. Da also in der Dreh-Endstellung die im erfindungsgemäßen Sicherungsadapter vorgesehene Ringdichtung funktionslos wird, kann das durch den Sicherungsadapter durchströmende Fluid an der Ringdichtung vorbei nach außen strömen und zeigt durch ein unkontrolliertes Verspritzen des Fluids an, dass an der mit Hilfe des erfindungsgemäßen Sicherungsadapters bewerkstelligten Verbindung manipuliert wurde.

Vorteilhaft kann es sein, wenn die Innenhülse in der Dreh-Endstellung des Sicherungsadapters mit einem, dem ersten Fluidleitungsabschnitts zugewandten Hülsen-Endbereich über die benachbarte Stirnfläche der Außenhülse vorsteht. Mit geeignetem und entsprechend schmalem Werkzeug, beispielsweise auch einer schmalen Wasserrohrzange, kann die Innenhülse an ihrem über die benachbarte Stirnfläche der Außenhülse vorstehenden Hülsen-Endbereich ergriffen und gegenüber der Außenhülse derart verdreht werden, dass sich die Innenhülse mit ihrem Befestigungsgewinde vom Gegengewinde am ersten Fluidleitungsabschnitt löst. Durch Lösen der Innenhülse vom Gegengewinde am ersten Fluidleitungsabschnitt wird auch der Hülseninnenraum der Innenhülse und ein darin vorgesehenes Funktionselement zugänglich. Durch einen vergleichsweise gering bemessenen Überstand des über die Außenhülse vorstehenden Hülsen-Endbereichs der Innenhülse lässt sich die mit Hilfe des erfindungsgemäßen Sicherungsadapters bewerkstelligte Verbindung nur mit einem entsprechend schmalen Spezial-Werkzeug lösen.

Um die Innenhülse mit ihrem Befestigungsgewinde auf das Gegengewinde am ersten Fluidleitungsabschnitt aufschrauben zu können, wenn auf die in der Schraub-Endstellung befindlichen Außenhülse ein Drehmoment aufgebracht wird, ist es vorteilhaft, wenn an der Außenhülse eine erste Werkzeugangriffsfläche vorgesehen ist.

Um das Befestigungsgewinde bei Bedarf mit geeignetem Werkzeug vom Gegengewinde am ersten Fluidleitungsabschnitt lösen zu können, kann es vorteilhaft sein, wenn an dem vorstehenden Hülsen-Endbereich der Innenhülse eine zweite Werkzeugangriffsfläche vorgesehen ist.

Dabei bestehen besonders einfache und vorteilhafte Ausführungsformgen gemäß der Erfindung darin, dass die Werkzeugangriffsfläche(n) jeweils durch zumindest eine umfangsseitige Schlüsselangriffsfläche an Außenhülse und/oder Innenhülse gebildet ist.

Um ein in die Fluidleitung zwischengeschaltetes Funktionselement gegen einen unberechtigten Zugriff zu schützen, ist es vorteilhaft, wenn im Hülseninnenraum der Innenhülse ein Durchflussmengenregler, ein Druckreduzierventil oder ein Rückflussverhinderer vorgesehen und vorzugsweise lösbar gehalten ist. Mit Hilfe beispielsweise des im Hülseninnenraum der Innenhülse sicher gehaltenen Durchflussmengenreglers kann die Durchflussleistung des durchströmenden Wassers derart automatisch eingeregelt werden, dass eine festgelegte maximale Durchflussleistung nicht überschritten wird. Zusätzlich zu oder statt dem Durchflussmengenregler kann im Hülseninnenraum der Innenhülse aber auch ein Rückflussverhinderer oder ein Druckreduzierventil vorgesehen sein.

Um den erfindungsgemäßen Sicherungsadapter als Kupplungsstück zwischen zwei benachbarten Fluidleitungsabschnitten einer Fluidleitung verwenden zu können, ist es vorteilhaft, wenn der Sicherungsadapter den ersten und den zweiten Leitungsabschnitt einer Fluidleitung und vorzugsweise einer Wasserleitung miteinander verbindet.

Dabei sieht ein bevorzugter Anwendungsfall vor, dass der Sicherungsadapter zum Anschluss an einem abströmseitigen und als Brausekopf oder Brauseschlauch ausgebildeten ersten oder zweiten Wasserleitungsabschnitt vorgesehen ist.

Zur vereinfachten Montage des erfindungsgemäßen Sicherungsadapters ist es vorteilhaft, wenn die Innenhülse zum Einschrauben ihres Außengewindes in das Innengewinde der Außenhülse über eine stirnseitige Einsetzöffnung in den Hülseninnenraum der Außenhülse einsetzbar ist, und wenn dem Anschlag am Hülseninnenumfang der Außenhülse eine sich in Einsteckrichtung konisch erweiternde und vorzugsweise umlaufende Einsteckschräge vorgeschaltet ist. Bei dieser Ausführungsform wird die Innenhülse in die stirnseitige Einsetzöffnung der Außenhülse eingeschoben, bis der eingeschobene Stirnrand der Innenhülse auf der am Hülseninnenumfang der Außenhülse vorgesehenen und sich in Einsteckrichtung konisch erweiternden, vorzugsweise umlaufenden Einsteckschräge aufläuft. Durch weiteren Druck auf die Innenhülse kann der am Außenumfang der Innenhülse angeordnete Gegenanschlag den am Hülseninnenumfang der Außenhülse angeordneten Anschlag überwinden, bis die Innenhülse und die Außenhülse locker, aber dennoch unlösbar aneinander gehalten sind. Durch weiteres Einschieben der Innenhülse in den Hülseninnenraum der Außenhülse wird das an dem Stirnendbereich der Innenhülse vorgesehene Außengewinde mit dem Innengewinde am Hülseninnenumfang der Außenhülse in Eingriff gebracht, so dass dieses Bewegungsgewinde zwischen Außenhülse und Innenhülse bis zu der Schraub-Endstellung miteinander verschraubt werden kann.

Um bei der Montage ein entsprechendes Drehmoment auf den erfindungsgemäßen Sicherungsadapter aufbringen zu können, ist es vorteilhaft, wenn die Außenhülse des Sicherungsadapters aus Metall und vorzugsweise aus Messing hergestellt ist.

Eine besonders einfache und leicht herstellbare Ausführungsform gemäß der Erfindung sieht vor, dass die Innenhülse aus Metall oder aus Kunststoff, vorzugsweise aus POM-Kunststoff, hergestellt ist.

Damit die zwischen der Innenhülse und der Außenhülse vorgesehene Verschraubung leicht gelöst werden kann, ohne dass damit auch ein Lockern des die Innenhülse am ersten Fluidleitungsabschnitt haltenden Befestigungsgewindes verbunden ist, ist es vorteilhaft, wenn das Außengewinde der Innenhülse oder das Innengewinde der Außenhülse eine größere Gewindesteigung aufweist als das Befestigungsgewinde der Innenhülse. Dabei wird eine Ausführungsform bevorzugt, bei der das beispielsweise als Innengewinde ausgebildete Befestigungsgewinde an der Innenhülse eine größere Steigung aufweist im Vergleich zu dem in der Außenhülse vorgesehenen Innengewinde des Bewegungsgewindes.

Weiterbildungen gemäß der Erfindung ergeben sich aus den Ansprüchen in Verbindung mit der Beschreibung sowie der Zeichnung. Nachstehend wird die Erfindung anhand eines bevorzugten Ausführungsbeispieles noch näher beschrieben.

Es zeigt:
- Fig. 1: einen in einem Teil-Längsschnitt dargestellten Sicherungsadapter mit einer Innenhülse, welche Innenhülse mit einem Außengewinde in der hier gezeigten Schraub-Endstellung des Sicherungsadapters in ein Innengewinde einer Außenhülse derart eingeschraubt ist, dass die Innenhülse vollständig im Hülsen-Innenraum der Außenhülse eingetaucht ist,
- Fig. 2: den ebenfalls teilgeschnitten dargestellten Sicherungsadapter aus Figur 1 in einer Dreh-Endstellung, in welcher Dreh-Endstellung die Innenhülse und die Außenhülse ohne Eingriff von Außen- und von Innengewinde relativ zueinander frei verdrehbar sind und in welcher Dreh-Endstellung die Innenhülse mit ihrem ersten Hülsen-Endbereich über die benachbarte Stirnfläche der Außenhülse geringfügig vorsteht,
- Fig. 3 und 4: den in Figur 1 und 2 gezeigten Sicherungsadapter, der hier am Hülsenaußenumfang seiner Außenhülse zumindest eine Werkzeugangriffsfläche aufweist,
- Fig. 5: den Sicherungsadapter aus den Figuren 1 bis 4 in einer auseinandergezogenen Perspektivdarstellung seiner Einzelteile,
- Fig. 6: den Sicherungsadapter aus den Figuren 1 bis 5 in einer auseinandergezogenen Perspektivdarstellung seiner längsgeschnittenen Einzelteile,
- Fig. 7: den Sicherungsadapter aus den Figuren 1 bis 6 in einem Anwendungsbeispiel, in welchem Anwendungsbeispiel der Sicherungsadapter einen Duschbrausekopf mit einem zuströmseitigen Fluidleitungsabschnitt verbindet, und
- Fig. 8: das in Figur 7 gezeigte Anwendungsbeispiel in einer auseinandergezogenen Darstellung der benötigten Einzelteile.

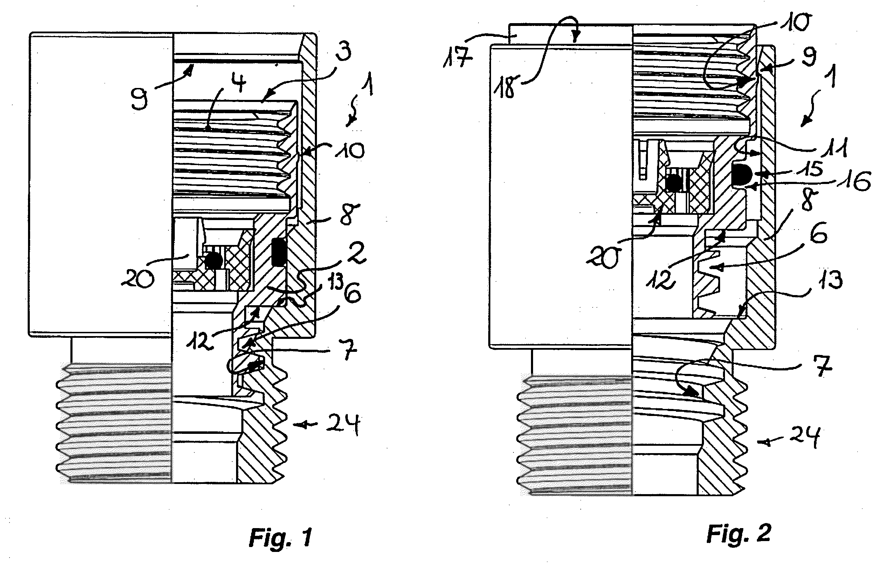

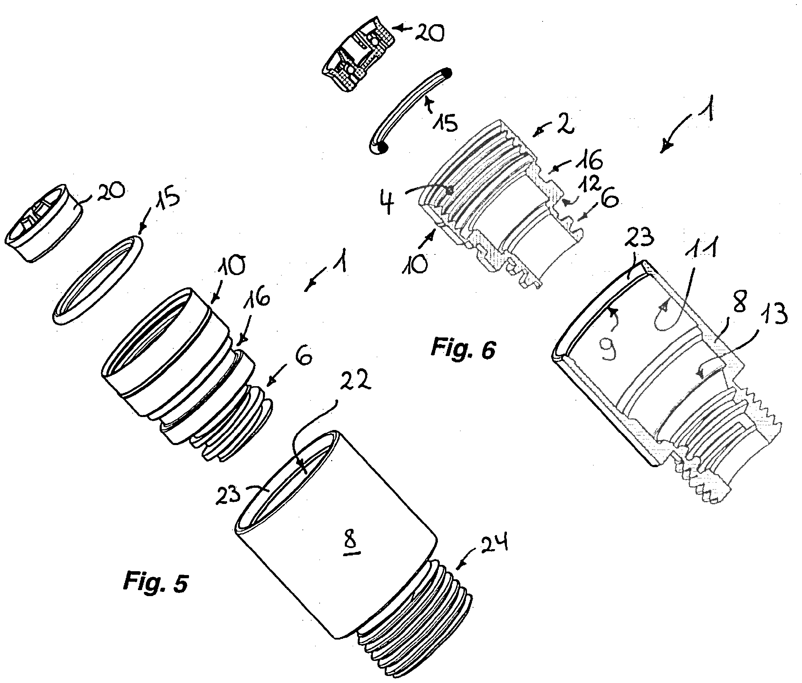

In den Figuren 1 bis 8 ist ein Sicherungsadapter 1, 1' mit einer Innenhülse 2 dargestellt, welche Innenhülse 2 an einem ersten Hülsen-Endbereich 3 ein Befestigungsgewinde 4 hat, das zum Anschluss des Sicherungsadapters 1, 1' an einem ersten Fluidleitungsabschnitt 5 vorgesehen ist. Der Sicherungsadapter 1, 1' weist an dem gegenüberliegenden zweiten Hülsenendbereich ein Außengewinde 6 auf, das demgegenüber als Bewegungsgewinde ausgebildet ist. Das an der Innenhülse 2 vorgesehene Außengewinde 6 ist mit einem Innengewinde 7 verschraubbar, welches Innengewinde 7 an einer Außenhülse 8 vorgesehen ist. Das Befestigungsgewinde 4 hat im Vergleich zu dem aus Außengewinde 6 und Innengewinde 7 gebildeten Bewegungsgewinde eine wesentlich höhere Reibung und kann auch selbstsichernd beziehungsweise selbsthemmend ausgebildet sein.

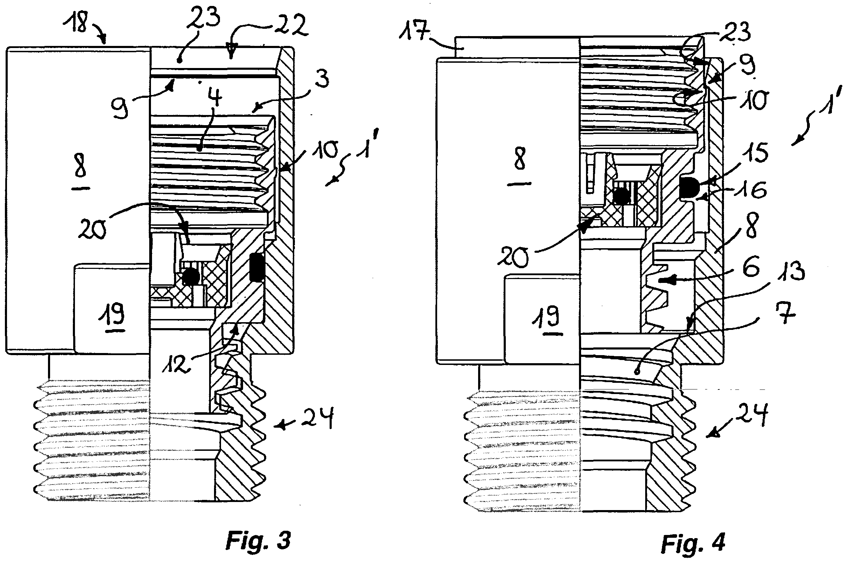

Am Hülseninnenumfang der Außenhülse 8 ist ein Anschlag 9 vorgesehen, an dem in der in Figur 2 und 4 gezeigten Dreh-Endstellung des Sicherungsadapters 1, 1' ein am Außenumfang der Innenhülse 2 angeordneter Gegenanschlag 10 derart anliegt, dass die Innenhülse 2 und die Außenhülse 8 ohne Eingriff von dem das Bewegungsgewinde bildenden Innen- und Außengewinde 7, 6 relativ zueinander frei drehbar sind. Demgegenüber ist die Innenhülse 2 mit ihrem Außengewinde 6 in der in Figur 1 und 3 gezeigten Schraub-Endstellung derart in das Innengewinde 7 der Außenhülse 8 eingeschraubt, dass eine Anschlagsfläche 12 an der Innenhülse 2 an einer Gegenanschlagsfläche 13 an der Außenhülse 8 anliegt. Ist die Innenhülse 2 in der in Figur 1 und 3 gezeigten Schraub-Endstellung vollständig in die Außenhülse 8 eingeschraubt und liegt die an der Innenhülse 2 vorgesehene Anschlagfläche 12 an der zugeordneten Gegenanschlagsfläche 13 der Außenhülse 8 an, wird ein auf die Außenhülse 8 ausgeübtes Drehmoment in dieser Schraub-Endstellung auf die Innenhülse 2 übertragen, so dass die Innenhülse 2 auch kraftvoll mit ihrem Befestigungsgewinde 4 auf ein Gegengewinde des ersten Fluidleitungsabschnitts 5 aufgeschraubt werden kann. Will insbesondere ein unberechtigter Anwender diese Verbindung wieder lösen, indem er mit einem entsprechenden Drehmoment am Außenumfang der Außenhülse 8 ansetzt, wird zunächst das wesentlich leichtgängigere und aus Außengewinde 6 und Innengewinde 7 gebildete Bewegungsgewinde zwischen der Innenhülse 2 und der Außenhülse 8 gelöst, während die Innenhülse 2 mit dem Befestigungsgewinde 4 sicher am ersten Fluidleitungsabschnitt 5 gehalten bleibt. Da ein Lösen des Befestigungsgewindes 4 insbesondere in der in Figur 2 und 4 gezeigten Dreh-Endstellung nicht möglich ist und da in dieser Dreh-Endstellung die Innenhülse 2 und die Außenhülse 8 relativ zueinander frei verdrehbar sind, bleibt der Sicherungsadapter 1, 1' mit dem Befestigungsgewinde 4 seiner Innenhülse 2 sicher und fest an dem ersten Fluidleitungsabschnitt 5 gehalten und das Hülseninnere der Innenhülse 2 sowie der Außenhülse 8 bleibt dem Anwender bis auf weiteres unerreichbar.

In den Figuren 1 bis 4 ist erkennbar, dass das zum Anschluss an dem ersten Fluidleitungsabschnitt 5 vorgesehene Befestigungsgewinde 4 als Steil- oder Spitzgewinde ausgestaltet ist. Dabei ist das an der Innenhülse 2 angeordnete Befestigungsgewinde 4 als Innengewinde ausgestaltet, das mit einem am ersten Fluidleitungsabschnitt vorgesehenen Gegengewinde zusammenwirkt.

Damit demgegenüber das aus Außengewinde 6 und Innengewinde 7 gebildete Bewegungsgewinde im Vergleich zum Befestigungsgewinde 4 vergleichsweise leichtgängig ist und sich durch eine geringe Reibung auszeichnet, ist das an der Innenhülse 2 vorgesehene Außengewinde 6 des Bewegungsgewindes als Trapezgewinde ausgestaltet.

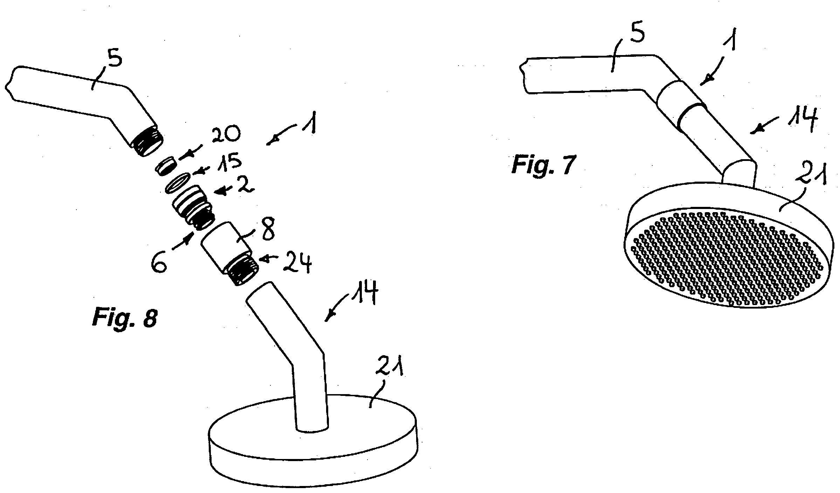

Aus den Figuren 1 bis 4 und insbesondere auch aus Figur 8 wird deutlich, dass die Außenhülse 8 zum Anschluss an einem zweiten Fluidleitungsabschnitt 14 ein Außengewinde 24 trägt.

Aus einem Vergleich der die Schraub-Endstellung zeigenden Figuren 1 und 3 und der die Dreh-Endstellung des Sicherungsadapters 1, 1' darstellenden Figuren 2 und 4 wird deutlich, dass zumindest eine Ringdichtung 15 vorgesehen ist, die einen zwischen der Innenhülse 2 und der Außenhülse 8 verbleibenden Ringspalt abdichtet. Am Hülsenaußenumfang der Innenhülse 2 ist dazu eine Ringnut 16 vorgesehen, die zur Aufnahme eines als Ringdichtung 15 dienenden Dichtrings dient. Während diese Ringdichtung 15 in der in Figur 1 und 3 gezeigten Schraub-Endstellung den Ringspalt abdichtet, ist diese Ringdichtung 15 in der in Figur 2 und 4 gezeigten Dreh-Endstellung des Sicherungsadapters 1, 1' derart im Bereich einer Querschnittserweiterung 16 des lichten Hülsen-Querschnitts der Außenhülse 8 angeordnet, dass die Ringdichtung 15 funktionslos und der zwischen Außenhülse 8 und Innenhülse 2 verbleibende Ringspalt daher fluiddurchlässig ist. Wird an dem in einem Anwendungsfall montierten Sicherungsadapter 1, 1' eine Drehbewegung vollzogen, um diesen Sicherungsadapter insbesondere unberechtigt zu lösen oder zu entfernen, so löst sich zunächst nur die Innenhülse 2 von der Außenhülse 8 aufgrund der größeren Steigung des aus Außengewinde 6 und Innengewinde 7 gebildeten Bewegungsgewindes im Vergleich zum Befestigungsgewinde 4 an der Innenhülse 2. Dabei wird der Sicherungsadapter 1, 1' von seiner Schraub-Endstellung in seine Dreh-Endstellung verdreht, in welcher Dreh-Endstellung die Ringdichtung 15 ihre Funktion verliert und die gegebenenfalls auch unberechtigte Manipulation am Sicherungsadapter 1, 1' durch über den Ringspalt aus dem Sicherungsadapter 1, 1' auslaufendes Wasser bemerkbar wird. Auch in der in Figur 2 und 4 gezeigten Dreh-Endstellung bleibt jedoch der Sicherungsadapter 1, 1' mit dem Befestigungsgewinde 4 seiner Innenhülse 2 am ersten Fluidleitungsabschnitt 5 gehalten. Der feste Halt des Sicherungsadapters 1, 1' am ersten Fluidleitungsabschnitt 5 ist selbst dann sichergestellt, wenn der zweite Fluidleitungsabschnitt 14 durch eine Relativverdrehung gegenüber der Außenhülse 8 des Sicherungsadapters 1, 1' von diesem gelöst wird.

Aus einem Vergleich der Figuren 1 und 3 einerseits sowie der Figuren 2 und 4 andererseits wird auch deutlich, dass die Innenhülse in der Dreh-Endstellung des Sicherungsadapters 1, 1' mit einem, dem ersten Fluidleitungsabschnitt 5 zugewandten Hülsen-Endbereich 17 über die benachbarte Stirnfläche 18 der Außenhülse 8 vorsteht. Die in den Figuren 1 bis 4 dargestellten Sicherungsadapter-Ausführungen 1, 1' sind im Wesentlichen baugleich; lediglich an der in den Figuren 3 und 4 dargestellten Sicherungsadapter-Ausführung 1, 1' ist an der Außenhülse 8 eine Werkzeugangriffsfläche vorgesehen, die hier durch zumindest eine umfangsseitige Schlüsselangriffsfläche 19 gebildet wird.

Wie aus den Teil-Längsschnitten gemäß den Figuren 1 und 4 deutlich wird, ist in die Innenhülse 2 von der dem ersten Fluidleitungsabschnitt 5 zugewandten Hülsenöffnung aus ein Durchflussmengenregler 20 in den Hülseninnenraum der Innenhülse 2 eingesetzt. Dieser Durchflussmengenregler 20, der im Sicherungsadapter 1, 1' gegen unberechtigte Manipulationen sicher gehalten ist, soll die Durchflussleistung des durchströmenden Wassers von sich aus und somit praktisch automatisch auf einen festgelegten Maximalwert einregeln. Der Sicherungsadapter 1, 1', der den ersten und den zweiten Leitungsabschnitt 5, 14 einer Fluidleitung miteinander verbindet, ist zum Anschluss eines Brauseschlauches oder - wie in dem in Figur 7 und 8 gezeigten Anwendungsbeispiel dargestellt ist, - zum Anschluss eines Brausekopfes 21 vorgesehen. Dabei ist der zweite Leitungsabschnitt 14 hier als Brausekopf 21 ausgebildet oder Bestandteil eines solchen Brausekopfes 21, der mit dem als Wasserzulauf dienenden ersten Fluidleitungsabschnitts über den als Kupplungsstück dienenden Sicherungsadapter 1 verbunden ist.

Die Innenhülse 2 ist zum Einschrauben ihres Außengewindes 6 in das Innengewinde 7 der Außenhülse 8 über eine stirnseitige Einsetzöffnung 22 der Außenhülse 8 in deren Hülseninnenraum einsetzbar. Damit die Innenhülse 2 während des Einsetzvorganges den am Hülseninnenumfang der Außenhülse 8 vorgesehenen Anschlag 9 mit ihrem Gegenanschlag 10 überwinden kann, ist dem Anschlag 9 eine sich in Einsteckrichtung konisch erweiternde und vorzugsweise umlaufende Einsteckschräge 23 vorgeschaltet.

Um auf die Außenhülse 8 und insbesondere auf die an der Außenhülse 8 angeordneten Werkzeugangriffsflächen ein entsprechendes Drehmoment ausüben zu können, ist es vorteilhaft, wenn die Außenhülse 8 aus Metall und vorzugsweise aus Messing hergestellt ist. Demgegenüber kann die Innenhülse 2 nicht nur aus Metall, sondern auch aus einem geeigneten Kunststoff, beispielsweise aus Polyoxymethylen-(POM)-Kunststoff, hergestellt sein.

### Bezugszeichenliste

- 1, 1': Sicherungsadapter
- 2: Innenhülse
- 3: erster Hülsen-Endbereich
- 4: Befestigungsgewinde
- 5: erster Fluidleitungsabschnitt
- 6: Außengewinde
- 7: Innengewinde
- 8: Außenhülse
- 9: Anschlag
- 10: Gegenanschlag
- 11: Querschnittserweiterung
- 12: Anschlagsfläche
- 13: Gegenanschlagsfläche
- 14: zweiter Fluidleitungsabschnitt
- 15: Ringdichtung
- 16: Ringnut
- 17: Hülsen-Endbereich
- 18: Stirnfläche
- 19: Schlüsselangriffsfläche
- 20: Durchflussmengenregler
- 21: Brausekopf
- 22: Einsetzöffnung
- 23: Einsteckschräge
- 24: Außengewinde

## Patentansprüche

1. Sicherungsadapter (1, 1') mit einer Innenhülse (2) und einer Außenhülse (8), wobei die Innenhülse (2) an einem ersten Hülsen-Endbereich (3) ein zum Anschluss an einem ersten Fluidleitungsabschnitt (5) vorgesehenes Befestigungsgewinde (4) und an einem zweiten Hülsen-Endbereich ein als Bewegungsgewinde ausgebildetes Außengewinde (6) aufweist, welches Außengewinde (6) mit einem Innengewinde (7) der Außenhülse (8) verschraubbar ist, und wobei die Innenhülse (2) in einer Schraub-Endstellung mit ihrem Außengewinde (6) derart in das Innengewinde (7) der Außenhülse (8) eingeschraubt ist, dass eine Anschlagsfläche (12) an der Innenhülse (2) an einer Gegenanschlagsfläche (13) an der Außenhülse (8) anliegt, **dadurch gekennzeichnet, dass** am Hülseninnenumfang der Außenhülse (8) ein Anschlag (9) vorgesehen ist, an dem in einer Dreh-Endstellung des Sicherungsadapters (1, 1') ein am Außenumfang der Innenhülse (2) angeordneter Gegenanschlag (10) derart anliegt, dass Innenhülse (2) und Außenhülse (8) ohne Eingriff von dem das Bewegungsgewinde bildenden Innen- und Außengewinde (7, 6) relativ zueinander frei drehbar sind.

2. Sicherungsadapter nach Anspruch 1, **dadurch gekennzeichnet, dass** das zum Anschluss an dem ersten Fluidleitungsabschnitt (5) vorgesehene Befestigungsgewinde (4) als Steil- oder Spitzgewinde ausgestaltet ist.

3. Sicherungsadapter nach Anspruch 1 oder 2, **dadurch gekennzeichnet, dass** das an der Innenhülse (2) angeordnete Befestigungsgewinde (4) ein Innengewinde ist.

4. Sicherungsadapter nach einem der Ansprüche 1 bis 3, **dadurch gekennzeichnet, dass** das an der Innenhülse vorgesehene Außengewinde (6) des Bewegungsgewindes ein Trapezgewinde ist.

5. Sicherungsadapter nach einem der Ansprüche 1 bis 4, **dadurch gekennzeichnet, dass** die Außenhülse (8) zum Anschluss an einem zweiten Fluidleitungsabschnitt (14) ein Außengewinde (24) trägt.

6. Sicherungsadapter nach einem der Ansprüche 1 bis 5, **dadurch gekennzeichnet, dass** zumindest eine Ringdichtung (15) vorgesehen ist, die einen zwischen der Innenhülse (2) und der Außenhülse (8) verbleibenden Ringspalt abdichtet.

7. Sicherungsadapter nach Anspruch 6, **dadurch gekennzeichnet, dass** am Hülsenaußenumfang der Innenhülse (2) mindestens eine Ringnut (16) zur Aufnahme eines als Ringdichtung (15) dienenden Dichtrings vorgesehen ist.

8. Sicherungsadapter nach Anspruch 6 oder 7, **dadurch gekennzeichnet, dass** die zumindest eine Ringdichtung (15) in der Schraub-Endstellung den Ringspalt abdichtet und in der Dreh-Endstellung derart im Bereich einer Querschnittserweiterung (11) des lichten Hülsen-Querschnitts der Außenhülse (8) angeordnet ist, dass die Ringdichtung (15) funktionslos und der zwischen Außenhülse (8) und Innenhülse (2) verbleibende Ringspalt daher fluiddurchlässig ist.

9. Sicherungsadapter nach einem der Ansprüche 1 bis 8, **dadurch gekennzeichnet, dass** die Innenhülse (2) in der Dreh-Endstellung des Sicherungsadapters (1, 1') mit einem dem ersten Fluidleitungsabschnitt (5) zugewandten Hülsen-Endbereich (17) über die benachbarte Stirnfläche (18) der Außenhülse (8) vorsteht.

10. Sicherungsadapter nach einem der Ansprüche 1 bis 9, **dadurch gekennzeichnet, dass** an der Außenhülse (8) eine erste Werkzeugangriffsfläche vorgesehen ist.

11. Sicherungsadapter nach einem der Ansprüche 9 und 10, **dadurch gekennzeichnet, dass** an dem vorstehenden Hülsen-Endbereich (17) der Innenhülse (2) eine zweite Werkzeugangriffsfläche vorgesehen ist.

12. Sicherungsadapter nach Anspruch 10 oder 11, **dadurch gekennzeichnet, dass** die Werkzeugangriffsfläche(n) durch zumindest eine umfangsseitige Schlüsselangriffsfläche (19) gebildet ist.

13. Sicherungsadapter nach einem der Ansprüche 1 bis 12, **dadurch gekennzeichnet, dass** im Hülseninnenraum der Innenhülse (2) ein Durchflussmengenregler (20), ein Druckreduzierventil oder ein Rückflussverhinderer vorgesehen und vorzugsweise lösbar gehalten ist.

14. Sicherungsadapter nach einem der Ansprüche 1 bis 13, **dadurch gekennzeichnet, dass** der Sicherungsadapter (1, 1') den ersten und den zweiten Leitungsabschnitt (5, 14) einer Fluidleitung und vorzugsweise einer Wasserleitung miteinander verbinden kann.

15. Sicherungsadapter nach einem der Ansprüche 1 bis 14, **dadurch gekennzeichnet, dass** der Sicherungsadapter (1, 1') zum Anschluss an einem abströmseitigen und als Brausekopf (21) oder Brauseschlauch ausgebildeten ersten oder zweiten Leitungsabschnitt vorgesehen ist.

16. Sicherungsadapter nach einem der Ansprüche 1 bis 15, **dadurch gekennzeichnet, dass** die Innenhülse (2) zum Einschrauben ihres Außengewindes (6) in das Innengewinde (7) der Außenhülse (8) über eine stirnseitige Einsetzöffnung (22) in den Hülseninnenraum der Außenhülse (8) einsetzbar ist und dass dem Anschlag (9) am Hülseninnenumfang der Außenhülse (8) eine sich in Einsteckrichtung konisch erweiternde und vorzugsweise umlaufende Einsteckschräge (23) vorgeschaltet ist.

17. Sicherungsadapter nach einem der Ansprüche 1 bis 16, **dadurch gekennzeichnet, dass** die Außenhülse (8) aus Metall und vorzugsweise aus Messing hergestellt ist.

18. Sicherungsadapter nach einem der Ansprüche 1 bis 17, **dadurch gekennzeichnet, dass** die Innenhülse aus Metall oder Kunststoff, vorzugsweise aus POM-Kunststoff, hergestellt ist.

19. Sicherungsadapter nach einem der Ansprüche 1 bis 18, **dadurch gekennzeichnet, dass** das Außengewinde (6) der Innenhülse (2) oder das Innengewinde (7) der Außenhülse (8) eine größere Gewindesteigung aufweist als das Befestigungsgewinde (4) der Innenhülse (2).

## Claims

1. Security adapter (1, 1') comprising an inner sleeve (2) and an outer sleeve (8), wherein the inner sleeve (2) has at a first sleeve end region (3) a fastening thread (4) provided for connection to a first fluid line portion (5) and has at a second sleeve end region an outer thread (6) provided as a movement thread, which outer thread (6) can be screwed with an inner thread (7) of the outer sleeve (8), and wherein the inner sleeve (2) is screwed by way of the outer thread (6) thereof into the inner thread (7) of the outer sleeve (8) in a screwed-in end position such that a stop surface (12) on the inner sleeve (2) bears against a counter stop surface (13) on the outer sleeve (8), **characterised in that** a stop (9) is provided on the sleeve inner circumference of the outer sleeve (8), against which stop a counter stop (10) arranged on the outer circumference of the inner sleeve (2) bears, in a rotational end position of the security adapter (1, 1'), such that the inner sleeve (2) and the outer sleeve (8) are freely rotatable in relation to one another without engagement of the inner and outer threads (7, 6) which form the movement thread.

2. Security adapter as claimed in claim 1, **characterised in that** the fastening thread (4) provided for connection to the first fluid line portion (5) is configured as a steep thread or V-thread.

3. Security adapter as claimed in claim 1 or 2, **characterised in that** the fastening thread (4) arranged on the inner sleeve (2) is an inner thread.

4. Security adapter as claimed in any one of claims 1 to 3, **characterised in that** the outer thread (6) of the movement thread provided on the inner sleeve is a trapezoidal thread.

5. Security adapter as claimed in any one of claims 1 to 4, **characterised in that** the outer sleeve (8) bears an outer thread (24) for connection to a second fluid line portion (14).

6. Security adapter as claimed in any one of claims 1 to 5, **characterised in that** at least one ring seal (15) is provided which seals an annular gap remaining between the inner sleeve (2) and the outer sleeve (8).

7. Security adapter as claimed in claim 6, **characterised in that** at least one annular groove (16) for receiving a sealing ring serving as the ring seal (15) is provided on the sleeve outer circumference of the inner sleeve (2).

8. Security adapter as claimed in claim 6 or 7, **characterised in that** the at least one ring seal (15) seals the annular gap in the screwed-in end position, and in the rotational end position is arranged in the region of a cross-sectional widening (11) of the clear sleeve cross-section of the outer sleeve (8) such that the ring seal (15) cannot function and the annular gap remaining between the outer sleeve (8) and the inner sleeve (2) is thus permeable to fluid.

9. Security adapter as claimed in any one of claims 1 to 8, **characterised in that**, in the rotational end position of the security adapter (1, 1'), the inner sleeve (2) protrudes beyond the adjacent end face (18) of the outer sleeve (8) by means of a sleeve end region (17) facing the first fluid line portion (5).

10. Security adapter as claimed in any one of claims 1 to 9, **characterised in that** a first tool engagement surface is provided on the outer sleeve (8).

11. Security adapter as claimed in any one of claims 9 and 10, **characterised in that** a second tool engagement surface is provided on the protruding sleeve end region (17) of the inner sleeve (2).

12. Security adapter as claimed in claim 10 or 11, **characterised in that** the tool engagement surface(s) is/are formed by at least one circumferential spanner engagement surface (19).

13. Security adapter as claimed in any one of claims 1 to 12, **characterised in that** a flow rate regulator (20), a pressure reduction valve or a backflow preventer is provided and held preferably releasably in a sleeve inner space of the inner sleeve (2).

14. Security adapter as claimed in any one of claims 1 to 13, **characterised in that** the security adapter (1, 1') can connect the first and second line portions (5, 14) of a fluid line, and preferably a water line, to one another.

15. Security adapter as claimed in any one of claims 1 to 14, **characterised in that** the security adapter (1, 1') is provided for connection to an outflow-side first or second line portion in the form of a shower head (21) or shower hose.

16. Security adapter as claimed in any one of claims 1 to 15, **characterised in that** in order for the outer thread (6) of the inner sleeve to be screwed into the inner thread (7) of the outer sleeve (8), the inner sleeve (2) can be inserted into the sleeve inner space of the outer sleeve (8) by way of an end-side insertion opening (22), and **in that** a preferably circumferential insertion bevel (23) which widens conically in the insertion direction is connected upstream of the stop (9) on the sleeve inner circumference of the outer sleeve (8).

17. Security adapter as claimed in any one of claims 1 to 16, **characterised in that** the outer sleeve (8) is produced from metal, and preferably from brass.

18. Security adapter as claimed in any one of claims 1 to 17, **characterised in that** the inner sleeve is produced from metal or synthetic material, preferably POM synthetic material.

19. Security adapter as claimed in any one of claims 1 to 18, **characterised in that** the outer thread (6) of the inner sleeve (2) or the inner thread (7) of the outer sleeve (8) has a greater thread pitch than the fastening thread (4) of the inner sleeve (2).

## Revendications

1. Adaptateur de sécurisation (1, 1') avec une douille intérieure (2) et une douille extérieure (8), dans lequel la douille intérieure (2) présente à une première région d'extrémité de douille (3) un filet de fixation (4) prévu pour le raccordement à une première partie de conduite de fluide (5) et à une deuxième région d'extrémité de douille un filet extérieur (6) constitué par un filet de déplacement, filet extérieur (6) qui peut être vissé avec un filet intérieur (7) de la douille extérieure (8), et dans lequel la douille intérieure (2) est vissée dans une position finale de vissage avec son filet extérieur (6) dans le filet intérieur (7) de la douille extérieure (8) de telle manière qu'une face de butée (12) sur la douille intérieure (2) s'applique sur une face de contrebutée (13) sur la douille extérieure (8), **caractérisé en ce qu'**il est prévu sur la périphérie intérieure de douille de la douille extérieure (8) une butée (9), sur laquelle, dans une position finale de rotation de l'adaptateur de sécurisation (1, 1'), une contrebutée (10) disposée sur la périphérie extérieure de la douille intérieure (2) s'applique, de telle manière que la douille intérieure (2) et la douille extérieure (8) puissent tourner librement l'une par rapport à l'autre sans intervention du filet intérieur et extérieur (7, 6) formant le filet de déplacement.

2. Adaptateur de sécurisation selon la revendication 1, **caractérisé en ce que** le filet de fixation (4) prévu pour le raccordement à la première partie de conduite de fluide (5) est réalisé sous forme de filet à pas rapide ou de filet triangulaire.

3. Adaptateur de sécurisation selon la revendication 1 ou 2, **caractérisé en ce que** le filet de fixation (4) disposé sur la douille intérieure (2) est un filet intérieur.

4. Adaptateur de sécurisation selon l'une quelconque des revendications 1 à 3, **caractérisé en ce que** le filet extérieur (6) du filet de déplacement prévu sur la douille intérieure est un filet trapézoïdal.

5. Adaptateur de sécurisation selon l'une quelconque des revendications 1 à 4, **caractérisé en ce que** la douille extérieure (8) porte un filet extérieur (24) pour le raccordement à une deuxième partie de conduite de fluide (14).

6. Adaptateur de sécurisation selon l'une quelconque des revendications 1 à 5, **caractérisé en ce qu'**il est prévu au moins un joint annulaire (15), qui obture une fente annulaire subsistant entre la douille intérieure (2) et la douille extérieure (8).

7. Adaptateur de sécurisation selon la revendication 6, **caractérisé en ce qu'**il est prévu sur la périphérie extérieure de douille de la douille intérieure (2) au moins une rainure annulaire (16) destinée à recevoir une bague d'étanchéité servant de joint annulaire (15).

8. Adaptateur de sécurisation selon la revendication 6 ou 7, **caractérisé en ce que** ledit au moins un joint annulaire (15) obture la fente annulaire dans la position finale de vissage et est disposé, dans la position finale de rotation, dans la région d'un élargissement de section transversale (11) de la section transversale de douille libre de la douille extérieure (8), de telle manière que le joint annulaire (15) soit sans fonction et que la fente annulaire subsistant entre la douille extérieure (8) et la douille intérieure (2) permette dès lors le passage de fluide.

9. Adaptateur de sécurisation selon l'une quelconque des revendications 1 à 8, **caractérisé en ce que** la douille intérieure (2) dans la position finale de rotation de l'adaptateur de sécurisation (1, 1') est saillante avec une région d'extrémité de douille (17) tournée vers la première partie de conduite de fluide (5) au-delà de la face frontale adjacente (18) de la douille extérieure (8).

10. Adaptateur de sécurisation selon l'une quelconque des revendications 1 à 9, **caractérisé en ce qu'**il est prévu sur la douille extérieure (8) une première face d'application d'outil.

11. Adaptateur de sécurisation selon une des revendications 9 et 10, **caractérisé en ce qu'**il est prévu sur la région d'extrémité de douille saillante (17) de la douille intérieure (2) une deuxième face d'application d'outil.

12. Adaptateur de sécurisation selon la revendication 10 ou 11, **caractérisé en ce que** la/les face(s) d'application d'outil est/sont formée(s) par au moins une face d'application de clé (19) en périphérie.

13. Adaptateur de sécurisation selon l'une quelconque des revendications 1 à 12, **caractérisé en ce qu'**un régulateur de débit (20), une soupape de réduction de pression ou un moyen anti-retour est prévu dans l'espace intérieur de douille de la douille intérieure (2) et est de préférence maintenu de façon amovible.

14. Adaptateur de sécurisation selon l'une quelconque des revendications 1 à 13, **caractérisé en ce que** l'adaptateur de sécurisation (1, 1') peut relier l'une à l'autre la première et la deuxième parties de conduite (5, 14) d'une conduite de fluide et de préférence d'une conduite d'eau.

15. Adaptateur de sécurisation selon l'une quelconque des revendications 1 à 14, **caractérisé en ce que** l'adaptateur de sécurisation (1, 1') est prévu pour le raccordement à une première ou à une deuxième partie de conduite située en aval et réalisée sous la forme d'un pomme de douche (21) ou d'un tuyau de douche.

16. Adaptateur de sécurisation selon l'une quelconque des revendications 1 à 15, **caractérisé en ce que** la douille intérieure (2) peut être introduite dans l'espace intérieur de douille de la douille extérieure (8) par une ouverture d'introduction frontale (22) pour visser son filet extérieur (6) dans le filet intérieur (7) de la douille extérieure (8) et **en ce qu'**une rampe d'entrée (23) s'évasant en cône dans la direction d'introduction et de préférence périphérique est disposée avant la butée (9) à la périphérie intérieure de douille de la douille extérieure (8).

17. Adaptateur de sécurisation selon l'une quelconque des revendications 1 à 16, **caractérisé en ce que** la douille extérieure (8) est fabriquée en métal et de préférence en laiton.

18. Adaptateur de sécurisation selon l'une quelconque des revendications 1 à 17, **caractérisé en ce que** la douille intérieure est fabriquée en métal ou en matière plastique, de préférence en matière plastique POM.

19. Adaptateur de sécurisation selon l'une quelconque des revendications 1 à 18, **caractérisé en ce que** le filet extérieur (6) de la douille intérieure (2) ou le filet intérieur (7) de la douille extérieure (8) présente un plus grand pas de filetage que le filet de fixation (4) de la douille intérieure (2).
